# EUROPÄISCHE PATENTSCHRIFT

(11) **EP 2 504 560 B1**
(45) Veröffentlichungstag und Bekanntmachung des Hinweises auf die Patenterteilung: **04.09.2013**
(21) Anmeldenummer: 10801099.2
(22) Anmeldetag: 22.11.2010
(51) Int. Cl.: F02M 55/00, F02M 55/02, F16L 19/02

(54) **DRUCKROHRSTUTZEN FÜR COMMON-RAIL-EINSPRITZSYSTEM**
PRESSURE PIPE FITTING FOR A COMMON-RAIL INJECTION SYSTEM
RACCORD DE TUYAU SOUS PRESSION POUR SYSTÈME D'INJECTION À RAMPE COMMUNE

(30) Priorität: 23.11.2009 AT 18542009
(43) Veröffentlichungstag der Anmeldung: 03.10.2012
(73) Patentinhaber: Robert Bosch GmbH, 70469 Stuttgart-Feuerbach (DE)
(72) Erfinder: GRASPEUNTNER, Christian, A-5400 Hallein (AT); UNTERBERGER, Gerhard, A-5322 Hof (AT)
(74) Vertreter: Keschmann, Marc
(86) Internationale Anmeldenummer: PCT/AT2010/000456
(87) Internationale Veröffentlichungsnummer: WO 2011/060477

(56) Entgegenhaltungen:
- EP-A1- 1 719 899
- DE-A1- 3 309 854
- DE-A1- 19 524 520
- DE-A1- 19 543 506
- DE-C1- 19 931 282
- GB-A- 2 013 822

## Beschreibung

Die Erfindung betrifft einen Druckrohrstutzen für die Zuleitung von Hochdruckkraftstoff zu und die Ableitung von Kraftstoff von einem Injektor eines Commmon-Rail-Einspritzsystems einer Brennkraftmaschine umfassend wenigstens ein Innenrohr und ein koaxial zum Innenrohr angeordnetes Außenrohr sowie ein in dem zwischen Außenrohr und Innenrohr ausgebildeten Ringraum angeordnetes Zwischenstück zur koaxialen Positionierung von Innenrohr und Außenrohr, wobei das Innenrohr stirnseitig eine vorzugsweise konische Sitzfläche aufweist und eine Gewindeverbindung vorgesehen ist, um das Zwischenstück in einem definierten axialen Abstand von der Sitzfläche am Innenrohr zu positionieren.

Die Erfindung betrifft weiters ein Commmon-Rail-Einspritzsystem einer Brennkraftmaschine mit einer Mehrzahl von Injektoren zum Einspritzen von Kraftstoff in den Brennraum der Brennkraftmaschine und Kraftstoffleitungen für die Zuleitung von Hochdruckkraftstoff zu und die Ableitung von Kraftstoff zu den Injektoren, wobei die Hochdruckleitungen jeweils mittels eines Druckrohrstutzens an die Injektoren angeschlossen sind.

Einspritzinjektoren in einem modularen Common-Rail-System sind dadurch gekennzeichnet, dass ein Teil des im System vorhandenen Speichervolumens im Injektor selbst vorhanden ist. Dadurch steigt die Baugröße des Injektors, sodass die Anordnung der Bauteile innerhalb des Zylinderkopfdeckels dies berücksichtigen muss. Insbesondere hat es sich als zweckmäßig erwiesen, bei besonders großen Injektoren den Anschluss der zuführenden Hochdruckleitung sowie den Ablauf der anfallenden Steuer- und Leckagemengen mit Hilfe eines seitlich angeschlossenen sogenannten Druckrohrstutzens zu realisieren. Dieser muss mehrere koaxiale Leitungsabschnitte aufweisen, um in einem Bauteil sowohl die Zuführung von Kraftstoff als auch die Abfuhr von Steuermenge zu gewährleisten.

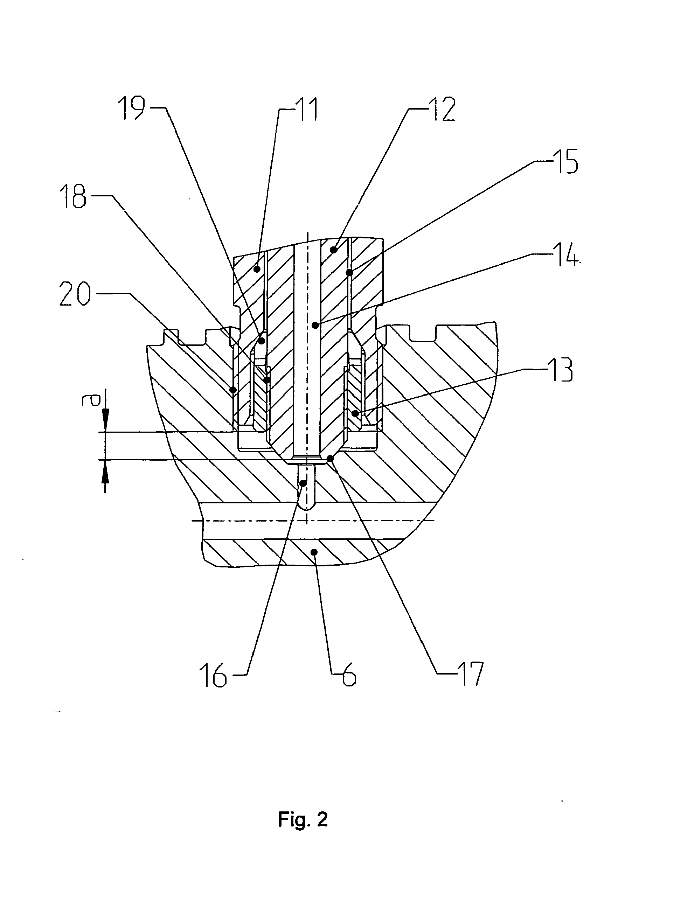

Die koaxialen Teile werden dabei von einem Außenrohr und einem Innenrohr gebildet, wobei ein Zwischenstück der exakten koaxialen Positionierung von Innenrohr und Außenrohr dient. Gleichzeitig ist die axiale Positionierung des Zwiechenstückes entscheidend, weil der Abstand des Zwischenstückes von der stirnseitig am Innenrohr ausgebildeten Sitzfläche die Anlage der Sitzfläche an den Injektor und damit die Dichtheit bestimmt und daher entsprechend exakt eingestellt und in der eingestellten Lage sicher beibehalten werden muss (siehe auch die Beschreibung der Fig. 2 weiter unten). Nachteilig bei der aus dem Stand der Technik bekannten Anschlusskonstruktion ist die aufwändige Einstellung des erwähnten Abstandes sowie die erforderliche Sicherung des eingestellten Abstands, damit der eingestellte Abstand beim Hantieren nicht verändert wird.

Ein Druckrohrstutzen der eingangs genannten Art nach dem Stand der Technik ist beispielsweise aus der Patentschrift DE 19931282 Cl bekannt. Dieses Dokument offenbart einen Druckrohrstutzen, bestehend aus einem Außenrohr, zwei Innenrohren sowie einem zwischen einem Innenrohr und dem Außenrohr angeordneten Zwischenstück, welches mithilfe einer Gewindeverbindung am Innenrohr befestigt ist, wobei das Innenrohr eine konische Sitzfläche aufweist.

Die vorliegende Erfindung zielt nun darauf ab, eine verbesserte Konstruktion des Druckrohrstutzens zu schaffen, mit welcher die erwähnten Nachteile vermieden werden können.

Zur Lösung dieser Aufgabe besteht die erfindungsgemäße Ausbildung bei einem Druckrohrstutzen der eingangs genannten Art im Wesentlichen darin, dass das Innenrohr einen in axialer Rich-tung wirksamen Anschlag aufweist, der mit einem Gegenanschlag des Zwischenstücks zusammenwirkt. Mit Hilfe des Anschlags kann der Abstand des Zwischenstücks von der sitzfläche präzise und sicher eingestellt werden sowie gleichzeitig eine Gewindesicherung in der Gewindeverbindung des Zwischenstücks mit dem Innenrohr realisiert werden. Auch der Montageprozess wird dadurch hinsichtlich Aufwand und Zeitbedarf stark vereinfacht.

Der Anschlag ist bevorzugt von einer Stufe am Außenumfang des Innenrohrs zwischen einem ersten, der Sitzfläche benachbarten Bereich des Innenrohrs und einem zweiten, in einem im Vergleich zum ersten Bereich größeren axialen Abstand von der Sitzfläche angeordneten Bereich mit gegenüber dem ersten Bereich größerem Durchmesser gebildet.

Eine die Gewindesicherung begünstigende Ausbildung ergibt sich, wenn die Stufe eine zur Rohrachse geneigte Erzeugende aufweist.

Vorteilhaft ist weiters eine Weiterbildung, bei der die Gewindeverbindung des Innenrohrs mit dem Zwischenstück im zweiten Bereich vorgesehen ist.

Die Anpressung der Sitzfläche des Innenrohrs an den entsprechenden Anschluss am Injektor erfolgt bevorzugt dadurch, dass das Zwischenstück einen mit dem Innenumfang des Außenrohrs zu-sammenwirkenden Anschlag aufweist, der bevorzugt von einer Mehrzahl von über den Umfang verteilten, insbesondere einwärts biegsamen Zungen gebildet ist. In diesem Zusammenhang ist mit Vorteil vorgesehen, dass das Außenrohr Verbindungsmittel zum Festlegen des Druckrohrstutzens an einer Anschlussstelle des Injektors aufweist, wobei die Verbindungsmittel bevorzugt von einem Gewinde gebildet sind.

Weitere Vorteile der Erfindung ergeben sich anhand der nachfolgenden Figurenbeschreibung.

Die Erfindung wird nachfolgend anhand eines in der Zeichnung schematisch dargestellten Ausführungsbeispiels näher erläutert. In dieser zeigen Fig. 1 schematisch den Aufbau eines modularen Common-Rail-Einspritzinjektors, Fig. 2 den Anschluss des Druckrohrstutzens im Injektor in einer Detailansicht nach dem Stand der Technik und Fig. 3 den Anschluss nach der vorliegenden Erfindung.

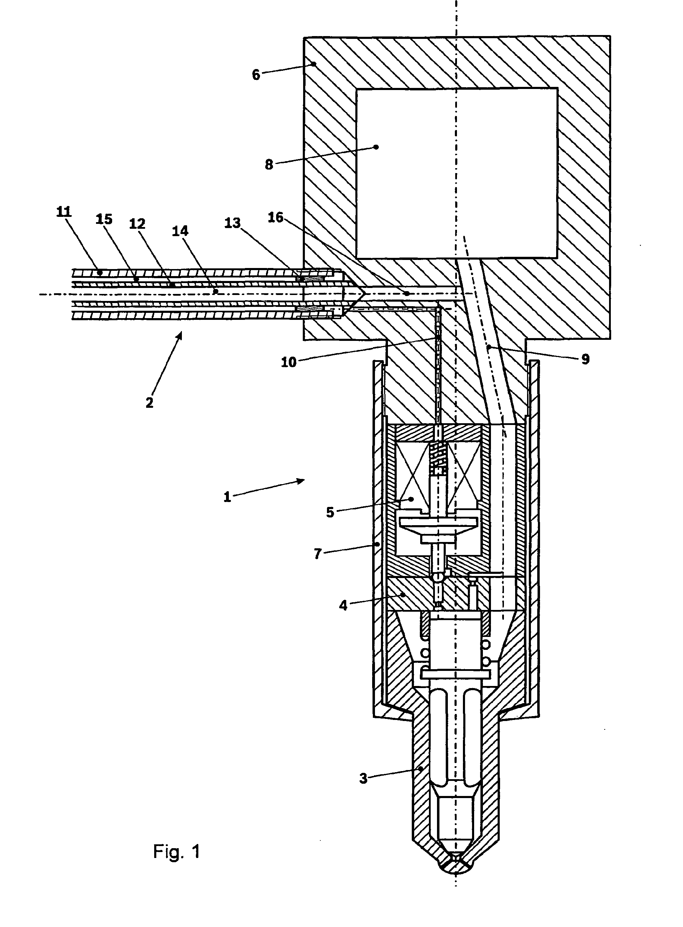

In Fig. 1 ist ein modularer Common-Rail-Einspritzinjektor 1 mit seitlich angeschlossenem Druckrohrstutzen 2 dargestellt. Der Injektor 1 besteht aus einer Einspritzdüse 3, einer Drosselplatte 4, einem Magnetventil 5 und einem Haltekörper 6, die von einer Düsenspannmutter 7 zusammengehalten werden. Im Haltekörper 6 ist ein Hochdruckspeicher 8 ausgebildet, von dem Kraftstoff über eine Hochdruckbohrung 9 den Funktionsbauteilen und der Düse 3 zugeführt werden. Die zur hydraulischen Betätigung der Düse 3 erforderliche Steuermenge wird über das Magnetventil 5 zurück in den Haltekörper 6 geleitet und strömt dort in der Niederdruckbohrung 10 nach außen. Der Druckrohrstutzen 2 ist mehrteilig aufgebaut. Er besteht aus einem Außenrohr 11, einem Innenrohr 12, sowie einem Zwischenstück 13. Im Innenrohr 12 ist der Hochdruckzulauf 14 ausgebildet. Hier strömt der unter Hochdruck befindliche Kraftstoff in den Injektor, wo er in der Hochdruckzulaufbohrung 16 zur Hochdruckbohrung 9 geführt wird. Die im Injektor anfallende Steuer- und Leckagemenge aus der Niederdruckbohrung 10 wird im Niederdruckringraum 15 zwischen Innenrohr 12 und Außenrohr 11 aus dem Zylinderkopf herausgeführt und in den Kraftstofftank zurück geleitet. Die koaxiale Positionierung von Innenrohr 12 und Außenrohr 11 erfolgt mit Hilfe des Zwischenstücks 13.

Fig. 2 zeigt den Anschluss des Druckrohrstutzens 2 im Injektor 1 in einer Detailansicht. Der Druckrohrstutzen 2 ist hier nach dem Stand der Technik ausgeführt. Dabei ist das Zwischenstück 13 mittels des Gewindes 18 am Innenrohr 12 befestigt, wobei das Zwischenstück 13 so weit auf das Innenrohr 12 aufgeschraubt wird, bis ein definiertes Maß "a" erreicht ist. Anschließend wird das aus Innenrohr 12 und Zwischenstück 13 bestehende Bauteil lose in das Außenrohr 11 eingesetzt. Das Außenrohr 11 wird nun mittels Gewinde 20 in den Haltekörper 6 eingeschraubt. Dadurch kommt es zu einem Formschluss zwischen Außenrohr 11 und mehreren Zungen 19, die am Zwischenstück 13 angebracht sind. Die Zungen 19 werden nach innen gebogen und positionieren somit das Innenrohr 12 koaxial zum Außenrohr 11. Gleichzeitig erfährt das Zwischenstück 13 eine axiale Kraftkomponente, die bewirkt, dass das mit dem Zwischenstück 13 verschraubte Innenrohr 12 gegen den Haltekörper 6 gepresst wird und somit am Sitz 17 eine hochdruckdichte Verbindung hergestellt wird. Der Nachteil dieser Anschlusskonstruktion liegt in der aufwändigen Einstellung von Maß "a", sowie an der erforderlichen Gewindesicherung im Gewinde 18, damit das Maß "a" beim Hantieren nicht verändert wird.

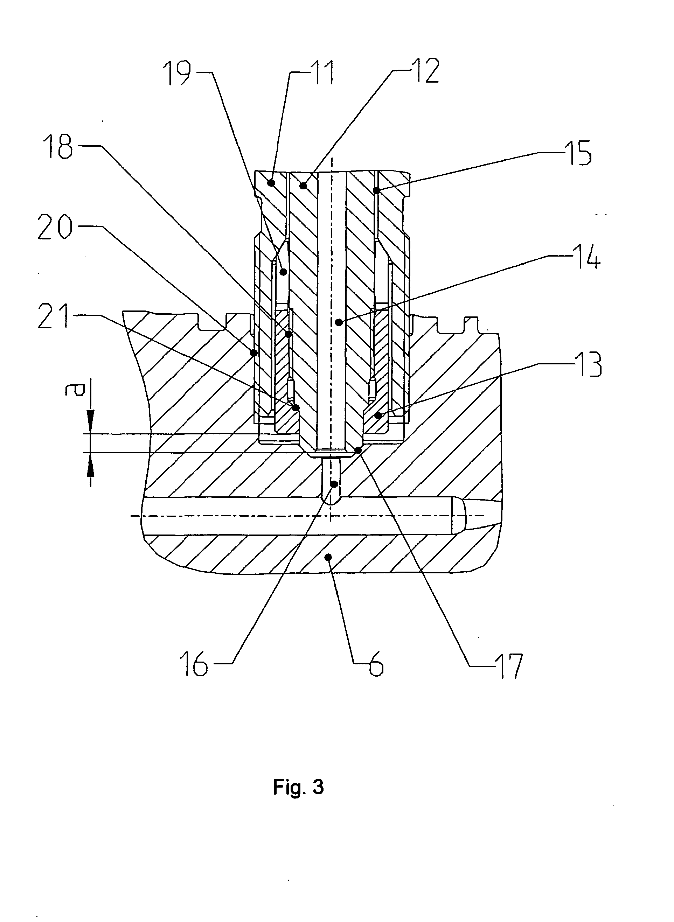

Fig. 3 zeigt den Anschluss nach der vorliegenden Erfindung. Bei der erfindungsgemäßen Ausführung besitzt das Innenrohr 12 eine zusätzliche Stufe 21, die einen Anschlag für das Aufschrauben des Zwischenstücks 13 auf das Gewinde 18 darstellt. Mit Hilfe dieser Stufe 21 wird das Maß "a" eingestellt, sowie gleichzeitig eine Gewindesicherung im Gewinde 18 realisiert. Auch der Montageprozess wird dadurch hinsichtlich Aufwand und Zeitbedarf stark vereinfacht.

## Patentansprüche

1. Druckrohrstutzen für die Zuleitung von Hochdruckkraftstoff zu und die Ableitung von Kraftstoff von einem Injektor eines Common-Rail-Einspritzsystems einer Brennkraftmaschine umfassend wenigstens ein Innenrohr (12) und ein koaxial zum Innenrohr angeordnetes Außenrohr (11) sowie ein in dem zwischen Außenrohr und Innenrohr ausgebildeten Ringraum angeordnetes Zwischenstück (13) zur koaxialen Positionierung von Innenrohr und Außenrohr, wobei das Innenrohr stirnseitig eine vorzugsweise konische sitzfläche (17) aufweist und eine Gewindeverbindung (18) vorgesehen ist, um das Zwischenstück in einem definierten axialen Abstand von der Sitzfläche am Innenrohr zu positionieren, **dadurch gekennzeichnet, dass** das Innenrohr (12) einen in axialer Richtung wirksamen Anschlag (21) aufweist, der mit einem Gegenanschlag des Zwischenstücks (13) zusammenwirkt.

2. Druckrohrstutzen nach Anspruch 1, **dadurch gekennzeichnet, dass** der Anschlag (21) von einer Stufe am Außenumfang des Innenrohrs (12) zwischen einem ersten, der Sitzfläche benachbarten Bereich des Innenrohrs (12) und einem zweiten, in einem im Vergleich zum ersten Bereich größeren axialen Abstand von der Sitzfläche angeordneten Bereich mit gegenüber dem ersten Bereich größerem Durchmesser gebildet ist.

3. Druckrohrstutzen nach Anspruch 2, **dadurch gekennzeichnet, dass** die Stufe eine zur Rohrachse geneigte Erzeugende aufweist.

4. Druckrohrstutzen nach Anspruch 2 oder 3, **dadurch gekennzeichnet, dass** die Gewindeverbindung des Innenrohrs (12) mit dem Zwischenstück (13) im zweiten Bereich vorgesehen ist.

5. Druckrohrstutzen nach einem der Ansprüche 1 bis 4, **dadurch gekennzeichnet, dass** das Zwischenstück (13) einen mit dem Innenumfang des Außenrohrs (11) zusammenwirkenden Anschlag aufweist, der bevorzugt von einer Mehrzahl von über den Umfang verteilten, insbesondere einwärts biegsamen Zungen (19) gebildet ist.

6. Druckrohrstutzen nach einem der Ansprüche 1 bis 5, **dadurch gekennzeichnet, dass** das Außenrohr (11) Verbindungsmittel zum Festlegen des Druckrohrstutzens (2) an einer Anschlussstelle des Injektors aufweist

7. Druckrohrstutzen nach Anspruch 6, **dadurch gekennzeichnet, dass** die Verbindungsmittel von einem Gewinde gebildet sind.

8. Common-Rail-Einspritzsystem einer Brennkraftmaschine mit einer Mehrzahl von Injektoren zum Einspritzen von Kraftstoff in den Brennraum der Brennkraftmaschine und Kraftstoffleitungen für die Zuleitung von Hochdruckkraftstoff zu und die Ableitung von Kraftstoff zu den Injektoren, **dadurch gekennzeichnet, dass** die Hochdruckleitungen jeweils mittels eines Druckrohrstutzens nach einem der Ansprüche 1 bis 7 an die Injektoren angeschlossen sind.

9. Common-Rail-Einspritzsystem nach Anspruch 8, **dadurch gekennzeichnet, dass** das Einspritzsystem als modulares Einspritzsystem mit Injektoren (1) mit jeweils eigenem Hochdruckspeicher (8) ausgebildet ist.

10. Common-Rail-Einspritzsystem nach Anspruch 8 oder 9, **dadurch gekennzeichnet, dass** die Injektoren (1) jeweils eine Düsennadel aufweisen, die in einem von einer vom Innenrohr des Hochdruckstutzens gebildeten Hochdruckzuleitung gespeisten Düsenraum angeordnet ist und zur Steuerung ihrer Öffnungs- und Schließbewegung von dem in einem mit Kraftstoff gefüllten Steuerraum herrschenden Druck in axialer Richtung beaufschlagbar ist, wobei der Druck im Steuerraum über ein wenigstens eine Zu-oder Ablaufdrossel für Kraftstoff öffnendes oder schließendes Magnetventil (5) gesteuert wird und das Magnetventil (5) zur Ableitung der Steuermenge über eine Niederdruckbohrung mit dem zwischen Außenrohr (11) und Innenrohr (12) ausgebildeten Ringraum (15) in Verbindung steht.

## Claims

1. A pressure pipe fitting for feeding high-pressure fuel to, and discharging fuel from, an injector of a common-rail injection system of an internal combustion engine, including at least one inner pipe (12) and an outer pipe (11) arranged coaxially with the inner pipe, and an intermediate piece (13), which is arranged in the annular space formed between the outer pipe and the inner pipe, for coaxially positioning the inner pipe and the outer pipe, wherein the inner pipe has a preferably conical seat surface (17) on its end face, and a threaded connection (18) is provided to position the intermediate piece at a defined axial distance from the seat surface on the inner pipe, **characterized in that** the inner pipe (12) comprises a stop (21) acting in the axial direction and cooperating with a counter-stop of the intermediate piece (13).

2. A pressure pipe fitting according to claim 1, **characterized in that** the stop (21) is formed by a step provided on the outer periphery of the inner pipe (12) between a first region of the inner pipe (12), adjacent to the seat surface of the inner pipe, and a second region, disposed at a larger axial distance from the seat surface than the first region and having a larger diameter than the first region.

3. A pressure pipe fitting according to claim 2, **characterized in that** the step has a generatrix that is relatively inclined to the pipe axis.

4. A pressure pipe fitting according to claim 2 or 3, **characterized in that** the threaded connection of the inner pipe (12) with the intermediate piece (13) is provided in the second region.

5. A pressure pipe fitting according to any one of claims 1 to 4, **characterized in that** the intermediate piece (13) comprises a stop that cooperates with the inner periphery of the outer pipe (11) and which, in a preferred manner, is formed by a plurality of tongues (19) distributed about the periphery and capable of being bent, in particular being bent inwardly.

6. A pressure pipe fitting according to any one of claims 1 to 5, **characterized in that** the outer pipe (11) comprises connecting means for fixing the pressure pipe fitting (2) to a connection site of the injector.

7. A pressure pipe fitting according to claim 6, **characterized in that** the connecting means are formed by a thread.

8. A common-rail injection system of an internal combustion engine, including a plurality of injectors for injecting fuel into the combustion chamber of the internal combustion engine, and fuel lines for feeding high-pressure fuel to, and discharging fuel from, the injectors, **characterized in that** the high-pressure lines are each connected to the injectors by the aid of a pressure pipe fitting according to any one of claims 1 to 7.

9. A common-rail injection system according to claim 8, **characterized in that** the injection system is configured as a modular injection system including injectors (1) each comprising its own high-pressure storage (8).

10. A common-rail injection system according to claim 8 or 9, **characterized in that** the injectors (1) each comprise a nozzle needle, which is disposed in a nozzle chamber fed by a high-pressure feed line formed by the inner pipe of the high-pressure fitting and, for controlling its opening and closing movements, can be pressurized in the axial direction by the pressure prevailing in a control chamber filled with fuel, wherein the pressure in the control chamber is controlled via a magnetic valve (5) opening or closing at least one inlet or outlet throttle for fuel, and the magnetic valve (5), for discharging the control quantity, communicates with a annular space (15) formed between the outer pipe (11) and the inner pipe (12) via a low-pressure bore.

## Revendications

1. Tubulure de refoulement pour l'arrivée de carburant haute pression à un injecteur et la dérivation de carburant d'un injecteur d'un système d'injection à rampe commune d'un moteur à combustion interne, comprenant au moins un tube intérieur (12) et un tube extérieur (11) disposé coaxialement au tube intérieur, ainsi qu'une pièce intermédiaire (13) disposée dans la chambre annulaire formée entre le tube extérieur et le tube intérieur pour assurer le positionnement coaxial du tube intérieur et du tube extérieur, le tube intérieur présentant en face avant une surface d'appui (17), de préférence conique, et une liaison filetée (18) étant prévue pour positionner la pièce intermédiaire à une distance axiale définie par rapport à la surface d'appui prévue sur le tube intérieur, **caractérisée en ce que** le tube intérieur (12) présente une butée (21) active en direction axiale, qui coopère avec une contre-butée de la pièce intermédiaire (13).

2. Tubulure de refoulement selon la revendication 1, **caractérisée en ce que** la butée (21) est constituée d'un gradin sur le pourtour extérieur du tube intérieur (12) entre une première région du tube intérieur (12) adjacente à la surface d'appui et une seconde région de plus grand diamètre que la première et située à une plus grande distance axiale de la surface d'appui que la première région.

3. Tubulure de refoulement selon la revendication 2, **caractérisée en ce que** le gradin présente une génératrice inclinée par rapport à l'axe des tubes.

4. Tubulure de refoulement selon la revendication 2 ou 3, **caractérisée en ce que** la liaison filetée du tube intérieur (12) avec la pièce intermédiaire (13) est prévue dans la seconde région.

5. Tubulure de refoulement selon l'une des revendications 1 à 4, **caractérisée en ce que** la pièce intermédiaire (13) présente une butée coopérant avec le pourtour intérieur du tube extérieur (11), laquelle est constituée, de préférence, d'une pluralité de languettes (19) réparties sur la périphérie, en particulier flexibles vers l'intérieur.

6. Tubulure de refoulement selon l'une des revendications 1 à 5, **caractérisée en ce que** le tube extérieur (11) présente des moyens de liaison pour la fixation de la tubulure de refoulement (2) en un point de raccordement de l'injecteur.

7. Tubulure de refoulement selon la revendication 6, **caractérisée en ce que** les moyens de liaison sont formés d'un filetage.

8. Système d'injection à rampe commune d'un moteur à combustion interne, comprenant une pluralité d'injecteurs destinés à l'injection de carburant dans la chambre de combustion du moteur à combustion interne et des conduites de carburant pour l'arrivée de carburant haute pression aux injecteurs et la dérivation du carburant des injecteurs, **caractérisé en ce que** les conduites haute pression sont respectivement raccordées aux injecteurs au moyen d'une tubulure de refoulement selon l'une des revendications 1 à 7.

9. Système d'injection à rampe commune selon la revendication 8, **caractérisé en ce que** le système d'injection est réalisé en tant que système d'injection modulaire pourvu d'injecteurs (1) ayant chacun leur propre accumulateur haute pression (8).

10. Système d'injection à rampe commune selon la revendication 8 ou 9, **caractérisé en ce que** les injecteurs (1) présentent chacun une aiguille d'injection disposée dans une chambre d'injecteur alimentée par une conduite d'arrivée haute pression formée par le tube intérieur de la tubulure haute pression et pouvant être alimentée en direction axiale par la pression régnant dans une chambre de commande remplie de carburant pour la commande de son mouvement d'ouverture et de fermeture, la pression dans la chambre de commande étant pilotée par l'intermédiaire d'une électrovanne (5) ouvrant ou fermant au moins un étranglement d'entrée ou de sortie de carburant, et l'électrovanne (5) communiquant avec la chambre annulaire (15) formée entre le tube extérieur (11) et le tube intérieur (12) pour la dérivation du débit de commande via un alésage basse pression.
